# EUROPEAN PATENT APPLICATION

(11) **EP 0 999 113 A1**
(43) Date of publication of application: **10.05.2000**
(21) Application number: 99118236.1
(22) Date of filing: 14.09.1999
(51) Int. Cl.: B61K 9/04, B60T 7/12

(54) **Hot bearing detector**

(30) Priority: 05.11.1998 US 186556
(71) Applicant: WESTINGHOUSE AIR BRAKE COMPANY, Wilmerding, PA 15148 (US)
(72) Inventor: Bezos, Angel P., Rockville, MD 20850 (US)
(74) Representative: Petri, Stellan

(57) **Abstract**

An apparatus detects whether a bearing has exceeded a critical temperature. The bearing is of the type that is packed within a housing of a bearing assembly. The apparatus includes a detector body (110), a plug material (120), a pneumatic conduit (130) and a mechanism (150) capable of warning of either a change in pressure or a characteristic increase in the flow of gas or both. Designed to be incorporated within the housing, the detector body (110) defines through itself a passage (111). Composed of a material that melts when exposed to a temperature that exceeds the critical temperature, the plug material (120) is used to fill and seal a first end (112) of the passage (111). Connected to a leading end of the pneumatic conduit (130) is a source (160) of pressurized gas. Connected to a terminal end of the pneumatic conduit is a second end (113) of the passage (111). From its second end (113) via the pneumatic conduit, the passage (111) receives, and is pressurized by, the gas from the source (160) of pressurized gas. Should the plug material (120) melt, the mechanism (150) will warn of the resulting drop in pressure, and/or the characteristic increase in the flow of gas, caused by resulting opening of the passage (111) of the detector body (110) to atmosphere.

## Description

### FIELD OF THE INVENTION

The invention generally relates to an apparatus used to monitor the integrity of bearings of the type commonly used in wheel/axle assemblies. More particularly, the invention pertains to an apparatus that employs the principles of material science and pneumatics to detect whether the bearings of a railcar wheel/axle assembly are becoming overheated.

### BACKGROUND OF THE INVENTION

The following background information is provided to assist the reader to understand the environment in which the invention will typically be used. The terms used herein are not intended to be limited to any particular narrow interpretation unless specifically stated otherwise in this document.

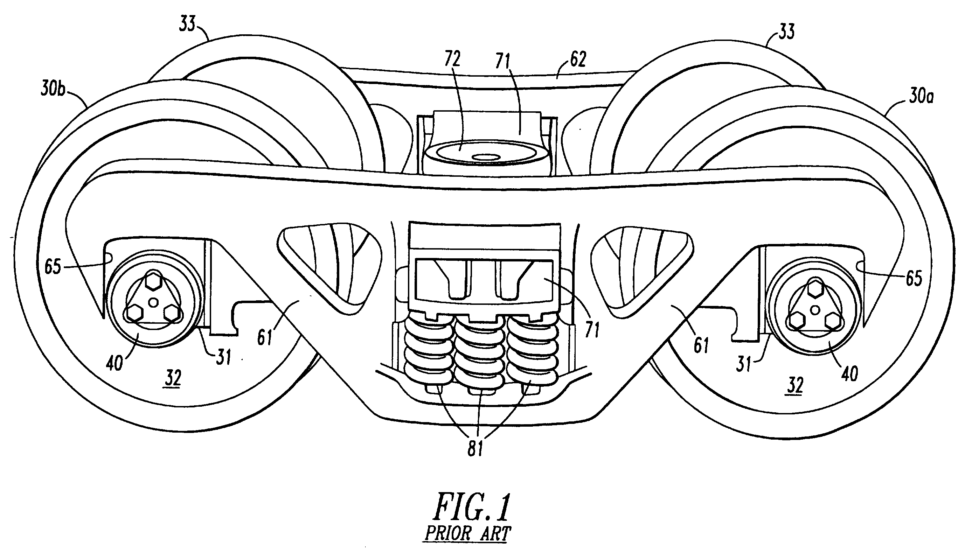

A railcar is comprised of a railcar body supported by two or more truck assemblies (hereinafter referred to as "trucks"). Most railcars used in freight and passenger transit trains have two trucks: one truck supporting the front of the railcar and the other truck supporting its rear. As shown in Figure 1, each truck typically features a pair of wheel/axle assemblies 30a and 30b, a pair of side frames 61 and 62, a bolster 71 with bowl 72, and a plurality of coil springs 81. The wheel/axle assemblies 30a-b are disposed in parallel. The near end of wheel/axle assembly 30a is interconnected by side frame 61 to the near end of wheel/axle assembly 30b. Likewise, the far end of wheel/axle assembly 30a is interconnected by side frame 62 to the far end of wheel/axle assembly 30b.

Regarding the construction of the wheel/axle assemblies, each wheel/axle assembly is composed of a main axle shaft 31, two railcar wheels 32 and 33 and two bearing assemblies 40. Each axle shaft 31 has a bearing assembly 40 concentrically disposed around each of its ends. Each wheel 32/33 is fixed to the axle shaft inboard of, and adjacent to, its neighboring bearing assembly 40.

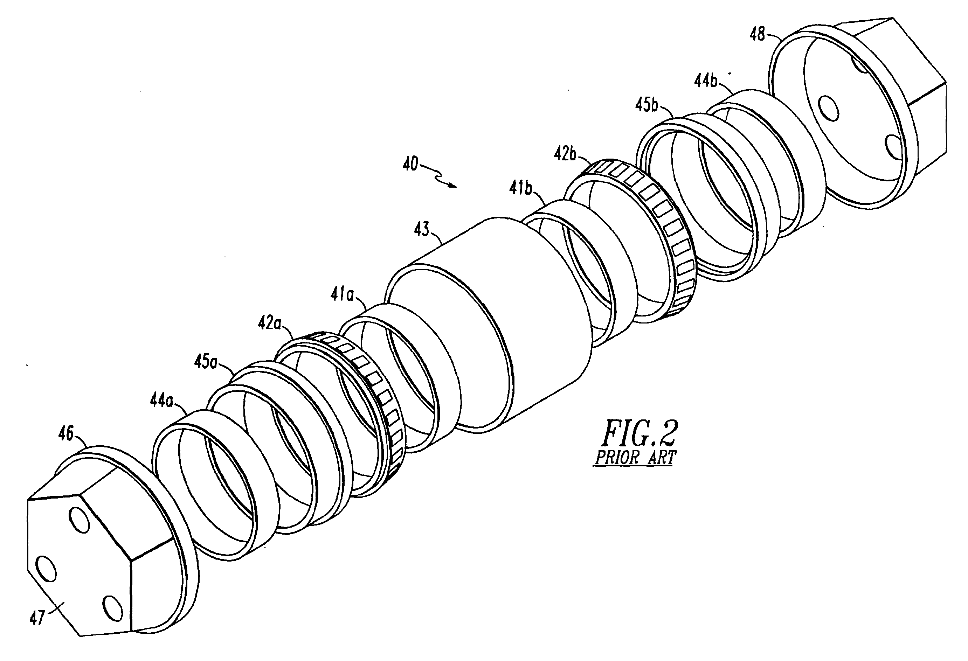

Referring now to Figure 2, the bearing assembly 40 shown therein is an example of one of the many types of bearing assemblies known in the railroad industry. The construction and operation of this particular bearing assembly, as well as many others, are well known in the railroad industry.

As for the particular bearing assembly depicted in Figure 2, it includes inner races 41a and 41b, a plurality of rotatable roller bearings held within cages 42a and 42b, an outer race enclosure 43 and various related components used to assemble the bearing assembly about axle shaft 31. In particular, the inner races 41a and 41b affix concentrically to axle shaft 31, with the bearing cages 42a and 42b situated between the inner races and the outer races of the stationary enclosure 43. Wear rings 44a and 44b affix to the axle shaft at opposite ends of, and adjacent to, the inner races. Grease or other lubricant is packed between the inner and outer races 41a-b and 43, and in the bearing cages 42a-b in between. The lubricant is contained there by grease seals 45a and 45b. Front end cap 46 along with locking plate 47 secure to the end of, and thus rotate with, axle shaft 31. Backing ring 48 provides the backstop for the bearing assembly 40 and also rotates with the axle shaft 31. Assembled about axle shaft 31 in this manner, the bearing housing via the rotatable bearings it carries allows the axle shaft to be rotated within the bearing assembly.

The railcar body on its underside is designed at each end to physically sit upon the bowl 72 of bolster 71 of one truck and allow that truck to swivel thereunder, as necessary, when the railcar encounters curved railway track. Spanning the opposing side frames 61 and 62, the bolster 71 transfers the weight of the railcar body onto the side frames via the coil springs 81. It is the function of coil springs 81 to dampen the vibrations that occur between the truck and the railcar body.

Regarding the assembly of side frames 61 and 62 to the axle shafts 31, each side frame has at each end an opening 65 on its track-facing side. Each opening 65 is shaped to accommodate the correspondingly shaped external housing of one of the bearing assemblies 40. By its two openings, side frame 61 affixes to, and rides upon, the two bearing housings on the near side of the pair of wheel/axle assemblies, as shown in Figure 1. The far side frame 62 likewise affixes to the two bearing housings on the far side (not shown) of the pair of wheel/axle assemblies. Together the side frames thus transfer the weight of the railcar body from bolster 71 to the wheel/axle assemblies of the truck. Being fixed within and rendered immovable by the side frames, the four bearing housings, via the bearings they carry, allow the axles 31 to rotate as the railcar wheels 31/32 affixed thereto ride atop the rails of the railway track.

Railcars of the type that possess the structural characteristics described above are commonly used in many different types of trains. Trains such as those used to transport freight and to carry passengers are but two examples. Because the invention described and claimed in this document can be incorporated into railcars designed for a variety of train applications, the basic characteristics of freight and passenger transit type trains are set forth below as two examples of the type of environment in which the invention can be used.

Regarding freight trains, a typical freight train includes one or more locomotives, a plurality of railcars and a pneumatic trainline referred to as the brake pipe. The brake pipe is composed of a series of interconnected pipe lengths, with one pipe length secured to the underside of each railcar. Each such pipe length connects via a pneumatic coupler to another such pipe length secured to a neighboring railcar. Considered in its entirety, the brake pipe is thus essentially one long continuous pipe that runs from the lead locomotive to the last railcar in the train. The brake pipe supplies the pressurized air that is required by the brake control system to charge the various reservoirs and operate the air brake equipment on each railcar in the freight train.

Located in the lead locomotive is a cab control unit and a central controller unit. From the lead locomotive a train operator can manipulate, as desired, one or both brake handles to apply and release the brakes of the trucks on the railcars. The inputs from the brake handles are processed by the cab control unit and passed to the central controller unit. In response to these and other inputs, the central controller unit issues a brake command signal along the brake pipe to all of the railcars in the form a pneumatic signal. By this pneumatic brake command signal, the central controller can order any action from a release of brakes to an emergency application of the brakes or any degree of brake application in between those two extremes. The air brake equipment on each railcar applies or releases the brakes according to the dictates of the particular brake command signal received from the brake pipe.

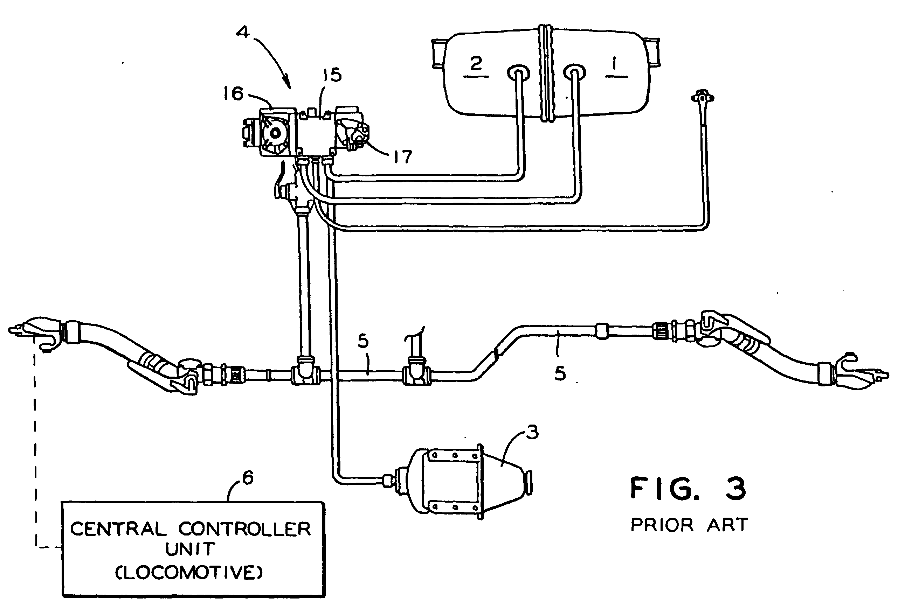

Figure 3 illustrates a schematic diagram of the air brake equipment typically found on a freight railcar. The air brake equipment includes an auxiliary air reservoir 1, an emergency air reservoir 2, one or more brake cylinders 3, and a conventional pneumatic brake control valve 4 such as an ABDX or ABDW type control valve made and sold by the Westinghouse Air Brake Company (WABCO) . This type of brake control valve 4 includes a service portion 16 and an emergency portion 17 typically mounted on opposite sides of a pipe bracket 15. The pipe bracket features a number of internal passageways and several ports. Each port connects to one of the interconnecting pipes from the railcar such as those leading to the auxiliary reservoir 1, the emergency reservoir 2, the brake cylinder 3 and the brake pipe 5. It is through the ports and passageways of the pipe bracket that the relevant portions of the pneumatic brake control valve 4 communicate fluidly with the pneumatic piping on the freight railcar.

The service and emergency portions of the pneumatic brake control valve operate according to principles well known in the railroad industry. The service portion 16 performs several functions including (1) controlling the flow of air from the auxiliary reservoir to the brake cylinders during a service brake application, (2) controlling the recharging of the auxiliary and emergency reservoirs, (3) controlling the exhausting of the brake cylinders when the brakes are released; and (4) reinforcing the brake application and release command signals pneumatically conveyed via the brake pipe. The emergency portion 17 controls, among other things, (1) recognition of the emergency brake application command signal pneumatically conveyed by the brake pipe and (2) the flow of air from both reservoirs to the brake cylinders during the emergency brake application. The emergency portion on each railcar also serves to propagate the emergency application brake signal along the freight train by rapidly venting the brake pipe to atmosphere. The brake control valve 4 on each freight railcar applies or releases the brakes according to the dictates of the particular brake command signal received from the brake pipe.

Regarding passenger transit trains, such a train is also comprised of a locomotive, a plurality of railcars and several trainlines. The trainlines include both pneumatic and electrical lines. One such pneumatic trainline is the main reservoir equalization (MRE) pipe. Charged by air compressors dispersed throughout the train, it is the MRE pipe that serves to supply air to the various reservoirs, such as the supply reservoir, located on each passenger railcar. Another pneumatic trainline particularly important to passenger transit trains is the brake pipe. It is used to convey to each railcar an emergency brake signal when an emergency condition arises. Of equal importance is an electrical trainline referred to as the brake control trainline. It is used to carry the brake command to each railcar in the train as discussed below.

Located in the lead locomotive is a master controller. The master controller houses a brake handle, a computer and various other related components. By moving the handle into the appropriate position, the train operator can initiate, maintain or halt braking or propulsion of the train. Based on the positions of the handle, the computer of the master controller can ascertain whether, and to what degree, the overall braking or propulsive effort of the train should be reduced or increased. Based on the inputs it receives and the software that dictates its operation, the master controller essentially controls the overall operation of the brakes. For service braking, the master controller formulates the brake command appropriate to current conditions and electrically conveys it along the brake control trainline to each of the railcars in the train. Through its brake command, the master controller can order any action from a release of brakes to a service application of the brakes or any degree of brake application in between those two extremes. For emergency braking, the master controller can command an emergency brake control valve on the locomotive to decrease brake pipe pressure to an emergency level. By reducing the brake pipe pressure to the emergency level, whether initiated from the locomotive or from any other point in the train, this sends an emergency brake signal pneumatically along the brake pipe to all the railcars. (A push-button type emergency valve in the locomotive may also be used to drop the brake pipe pressure to the emergency level.)

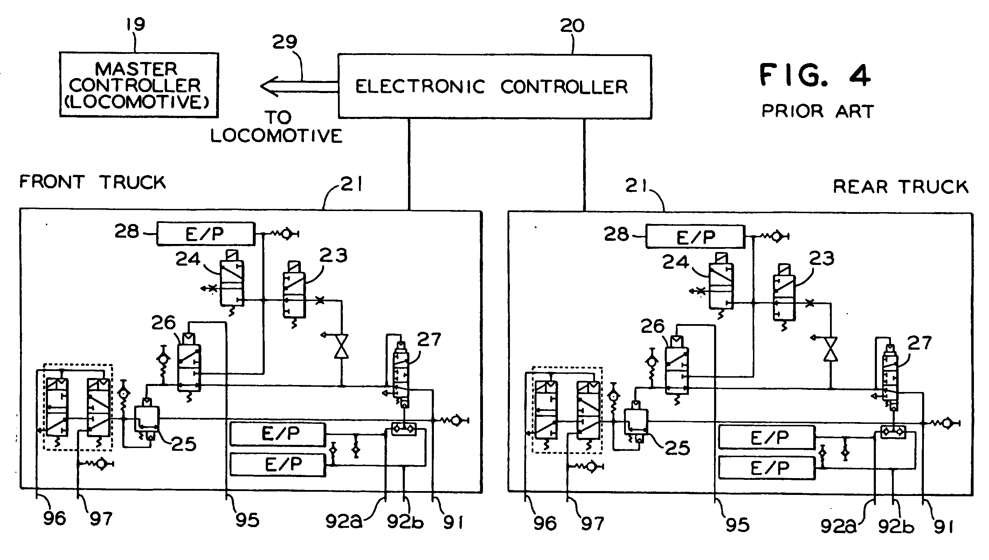

As shown in Figure 4, each passenger transit railcar typically includes an electronic controller 20 and, as described previously, two trucks. The brake equipment for a single truck includes a pneumatic control unit and one or more pneumatically operated brake cylinders. In response to the brake command received from the master controller 19 in the locomotive, the electronic controller 20 controls the operation of both trucks on the railcar via two separate central processing units (CPUs). Along with its associated interface equipment, each CPU controls the pneumatic control unit 21 of one truck independently of the other truck. It does so based on the brake command and various other inputs specific to the particular truck that it controls.

Each pneumatic control unit 21 typically includes an application magnet valve (AMV) 23, a release magnet valve (RMV) 24, a relay valve 25, an emergency transfer valve (ETV) 26 and a variable load valve (VLV) 27. The relay valve typically takes the form of a J-1 relay valve made and sold by WABCO. Well known in the brake control art, the J-1 relay valve features a control port connected to the ETV, a supply port supplied by the supply reservoir, an output port from which air can be directed from the supply reservoir line 91 to the brake cylinder line 97, and an exhaust port from which to vent the brake cylinder(s) via line 97 to atmosphere. From its output port, the relay valve 25 provides to the brake cylinder(s) a pressure proportional to the pressure that impinges upon its control port.

During non-emergency operation of the pneumatic control unit (i.e., when pressure in the brake pipe 95 lies above the emergency level), the ETV assumes an access state in which it connects the control port to both the AMV and RMV. The AMV 23 when opened then allows air from the supply reservoir line 91 via the VLV to reach the control port. The RMV 24 when opened allows whatever pressure that impinges on the control port to be vented to atmosphere. By selectively controlling the opening and closing of the AMV and RMV when the ETV is switched to the access state, the electronic controller 20 can control the magnitude of the pressure received by the control port. A brake cylinder control transducer (BCCT) 28 converts the pressure at the control port to an electrical feedback signal. Along with other signals such as those relating to speed, dynamic braking, wheel slip, the air spring feedback, request for snow braking and others, this electrical feedback signal is conveyed to the electronic controller 20 to aid it in controlling each pneumatic control unit 21 independently.

The electronic controller 20 acts upon the brake command that it receives from the master controller 19 in the locomotive. Specifically, during service braking, each CPU formulates the exact amount of braking effort appropriate for its truck. It does this by processing the brake command and the aforementioned other signals according to a brake control process whose specifics are not pertinent to the invention described and claimed below. Operating in what can be referred to as a service braking mode when its ETV is switched to the access state, the pneumatic control unit 21 has its AMV and RMV magnet valves controlled by their corresponding CPU. By such control of the magnet valves, the CPU can control the flow of air from the supply reservoir via the VLV and the AMV and RMV magnet valves to the control port via the ETV. This produces at the control port a low capacity pressure corresponding to the amount of braking effort formulated for that particular truck.

The pneumatic control unit 21 operates in what can be referred to as an emergency braking mode when its ETV is switched to the bypass state. Specifically, in an emergency, the ETV responds to the emergency brake signal by pneumatically switching itself to the bypass state in which the AMV and RMV are cutoff from the control port. Air from the supply reservoir is then allowed to flow via the VLV through the ETV directly to the control port. The VLV limits the maximum pressure at which air from the supply reservoir is directed to the control port. This maximum pressure level is proportional to the pressure that the VLV receives from the air spring lines 92a-b, and thus to the load borne by the truck. For any particular load, the VLV determines the maximum allowable pressure that will be supplied to the control port in an emergency. Built at the control port of the relay valve in this manner is a low capacity pressure capable of initiating an emergency application of the brakes on the truck. From its output port, the relay valve provides to the brake cylinder(s) a high capacity pressure proportional to the pressure that impinges upon its control port.

On both freight and passenger transit railcars, the magnitude of the braking force applied to the wheels of the truck is directly proportional to the pressure built up in the brake cylinder(s). The brake cylinder(s) convert the pressurized air that they receive to mechanical force. This force is transmitted by mechanical linkage to the brake shoes of the truck. Forced against the truck wheels and/or discs, the brake shoes are used to slow or stop the rotation of the wheels according to the particular braking effort sought.

One problem common to all railcars, including those used in freight and passenger transit type trains, is the lack of a simple apparatus with which to ascertain the integrity of the bearings in the wheel/axle assemblies. Comprised of many parts, a bearing assembly must be properly assembled, lubricated and maintained to perform its intended function. The bearings, and the housing in which they are packed, are subject to ordinary mechanical wear and tear. Loss or degradation of the lubricant causes the bearings and the housing to heat up, degrade, and even melt or break. Depending on how long the problem goes undiscovered, damage could occur not only to the various parts of the bearing assembly but also to the axle shaft about which the bearing assembly is assembled.

### OBJECTIVES OF THE INVENTION

It is, therefore, a primary objective of the invention to provide an apparatus that can detect whether the bearings of a railcar wheel/axle assembly are becoming overheated.

Another objective is to provide an apparatus that employs the principles of material science and pneumatics for monitoring the thermal integrity of such bearings.

Yet another objective is to provide a hot bearing detector whose design allows it to be incorporated into a wide variety of bearing assemblies.

Still another objective is to provide a hot bearing detector that is inexpensive, requires few parts, and is simple to implement.

Even another objective is to provide a system of hot bearing detectors on each truck by which all of the bearing assemblies on a truck are equipped with such an apparatus.

In addition to the objectives and advantages listed above, various other objectives and advantages of the invention will become more readily apparent to persons skilled in the relevant art from a reading of the detailed description section of this document. The other objectives and advantages will become particularly apparent when the detailed description is considered along with the following drawings and claims.

### SUMMARY OF THE INVENTION

In one embodiment, the invention provides an apparatus for detecting whether a bearing has exceeded a critical temperature. The bearing is of the type that is packed within, or otherwise accommodated by, a housing of a bearing assembly. The apparatus includes a detector body, a plug material, a pneumatic conduit and a mechanism capable of warning of either a change in pressure or a characteristic increase in the flow of gas or both. Preferably designed to be incorporated within the bearing housing, the detector body defines through itself a passage. Composed of a material that melts when exposed to a temperature that exceeds the critical temperature, the plug material is used to fill and seal the first end of the passage. The pneumatic conduit connects at its leading end to a source of pressurized gas and at its terminal end to the second end of the passage. From its second end via the conduit, the passage receives, and is normally pressurized by, the gas from the source of pressurized gas. The pressure in the passage escapes to atmosphere when the plug material melts. The mechanism warns of the resulting drop in pressure, and/or the characteristic increase in the flow of gas, caused by the melting of the plug material within the passage of the detector body.

### BRIEF DESCRIPTION OF THE DRAWINGS

Figure 1 is a side view of a railcar truck that features a side view of two prior art bearing assemblies.
Figure 2 is an exploded view of a prior art bearing assembly illustrative of one of the many types of bearing assemblies into which the invention can be incorporated.
Figure 3 is a schematic diagram of brake equipment, inclusive of a prior art pneumatic brake control valve, of the type commonly used to operate the brakes of a freight railcar.
Figure 4 is a schematic diagram of brake equipment, inclusive of a prior art pneumatic control unit, of the type commonly used to operate the brakes on one truck of a passenger transit railcar.
Figure 5A is a cross-sectional view of a hot bearing detector according to a first embodiment of the invention.
Figure 5B is a cross-sectional view of a hot bearing detector according to a second embodiment of the invention.

### DETAILED DESCRIPTION OF THE INVENTION

Before describing the invention in detail, the reader is advised that, for the sake of clarity and understanding, identical components having identical functions have been marked where possible with the same reference numerals in each of the Figures provided in this document.

Figures 1-4 illustrate one or more of the many possible environments in which the invention described and claimed below can be used. More particularly, the bearing assembly 40 shown in Figure 2 is an example of one of the many types of bearing assemblies into which the invention can be incorporated. Having described in the background section of this document a typical operating environment for the invention, a detailed description of the invention is now presented.

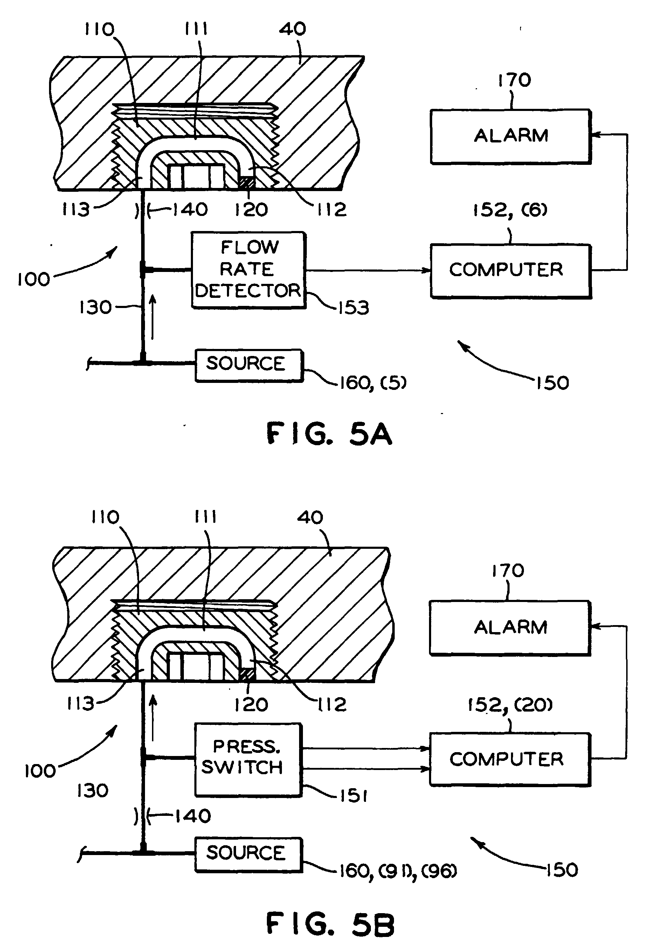

Figures 5A-B illustrate the invention -- an apparatus for detecting whether a bearing has exceeded a critical temperature, referred to colloquially hereinafter as a hot bearing detector 100. In its most basic embodiment, the hot bearing detector 100 includes a detector body 110, a plug material 120, a pneumatic conduit 130 and a means 150 for warning when the bearings of a wheel/axle assembly exceed a critical temperature. The means 150 does this by detecting a change in pressure, and/or a characteristic increase in the flow of air, within a passage 111 defined through detector body 110.

It is preferred that the detector body 110 be incorporated into a bearing housing, preferably as near to the bearings as is practicable. Alternatively, the detector body 110 may be affixed to an external surface of the bearing housing in such a way as to maximize the thermal conductivity from the bearing housing to the detector body 110. For the railcar truck environment to which this invention is preferably applied, the bearing housing may take the form of the enclosure 43 or other suitable parts of the aforementioned bearing assembly 40. It is preferred that the detector body 110 be constructed in the form of a threaded plug so that it can be screwed into a threaded bore of corresponding dimensions formed within the bearing housing. Especially for the threaded plug form of detector body, the passage 111 is preferably U-shaped. This renders both ends of passage 111 accessible from the same side of the detector body 110 when the detector body is screwed into the threaded bore of the bearing housing.

The plug material 120 is used to fill and completely seal the first end 112 of the passage 111. The plug material must be composed of a material that melts when exposed to a temperature that exceeds the critical temperature. The critical temperature, of course, will vary depending on either the type of environment in which the invention will be used or the purpose for which the invention will be used. The critical temperature, for example, may be designated as the maximum permissible temperature at which the bearings can safely operate without suffering the adverse affects of heat. Alternatively, the critical temperature may be designated as merely a temperature that is abnormally high for a bearing assembly, even if far below the maximum permissible temperature at which the bearings can safely operate. For bearing assemblies commonly used with railcar truck axles, the critical temperature may be designated as being somewhere in the range of 180 to 220 °F.

No matter in which environment or for what purpose the invention will be used, the plug material 120 can be selected from a variety of compositions whose properties are well known in the relevant art. Waxes and metals are just two of the many different kinds of materials available in a variety of different formulations. Motor wax and solder type material are but two examples of the types of compositions from which a plug material 120 of the desired melting point may be selected.

The pneumatic conduit 130 interconnects the passage 111 of detector body 110 with a source 160 of pressurized gas such as air. Specifically, via suitable pneumatic fittings, the pneumatic conduit connects at its leading end to the source 160 of pressurized gas and at its terminal end to a second end 113 of passage 111 in the detector body 110. From its second end, the passage 111 thus receives, and is pressurized by, the gas from the source 160 of pressurized gas.

A choke 140 is preferably incorporated within, or connected to one end of, the pneumatic conduit 130, as shown in Figures 5A-B. Gas flowing from the source 160 through choke 140 to the passage 111 via the pneumatic conduit 130 pressurizes the passage 111 in the detector body 110. Pressurized in this way, the passage 111 of detector body 110 remains pressurized as long as its first end 112 remains plugged with the plug material 120.

As long as the bearings in the bearing housing remain at the critical, temperature or below, the plug material 120 retains its integrity and will not melt. During operation of the bearing assembly, as the temperature of the bearings rise, the heat thermally conducts through the bearing housing to the detector body 110. Should the temperature of the bearings exceed the critical temperature, the plug material 120 will soon melt thereby causing the pressure contained in the detector body to escape to atmosphere via the first end 112 of passage 111.

In the most basic embodiment of the invention best shown in Figure 5B, the means 150 that is used to warn when the bearings exceed the critical temperature preferably includes a pressure switch 151 and a computer 152. The pressure switch may be disposed at any one of several points within the hot bearing detector. For example, the pressure switch 151 may be placed at any point within the pneumatic conduit 130 or into either of its pneumatic fittings. It is used to detect whenever a predetermined drop in pressure occurs in the passage 111. The exact magnitude of the predetermined pressure drop depends on the environment in which the invention will be used. For bearing assemblies commonly used with railcar truck axles, the predetermined pressure drop may lie within the range of 40 to 80 psi. In response to the predetermined drop, the pressure switch 151 generates a signal indicative of that drop. The signal, for example, may merely be effected by a closing of the switch thereby establishing continuity between two points in a circuit. The computer 152 can respond to this signal by activating an alarm, visual display or other means 170 for notifying an operator that the bearing has exceeded the critical temperature.

In a first presently preferred embodiment shown in Figure 5A, the invention is adapted more specifically to a railcar truck of the type used in freight trains. Specifically, the source of pressurized gas 160 to which the pneumatic conduit 130 connects may, for example, be the brake pipe 5 shown in Figure 3. Consequently, any pressure drop occurring in the passage 111 gives rise to an increase in the rate at which air flows in the brake pipe. As the brake pipe runs the length of the train, the means 150 for warning when the bearings exceed the critical temperature is preferably located in the lead locomotive. The means 150 for warning thus preferably takes the form of a differential pressure transducer, a flow meter or other means 153 for detecting a preset increase in flow of air within the brake pipe 5. It also preferably includes the aforementioned central controller unit 6 of Figure 3 as the computer 152 shown in Figure 5A. It is this flow detecting device 153 that generates an electrical signal proportional to the rate at which air flows within the brake pipe of the train.

Located in the lead locomotive of the freight train is the aforementioned central controller unit 6. The central controller unit 6 can be programmed to respond to the electrical signal only when the signal exhibits characteristics indicative of a leak caused by the hot bearing detector. Should the rate of flow be characteristic of the service or emergency brake application command signals routinely conveyed pneumatically along the brake pipe, the central controller would ignore the electrical signal. Upon receiving an electrical signal indicative of a compromised hot bearing detector, the central controller unit can be used to activate an alarm, visual display or other means 170 of notifying the train operator that the bearing has exceeded the critical temperature.

In a second presently preferred embodiment shown in Figure 5B, the invention is adapted more specifically to a railcar truck of the type used in passenger transit trains. Specifically, the source of pressurized gas 160 to which the pneumatic conduit 130 connects may be the supply reservoir line 91, the main reservoir line 96 or another appropriate pneumatic line or source associated with the pneumatic control unit 21 shown in Figure 4. The means 150 for warning of the change in pressure in the passage preferably employs the pressure switch 151. It also preferably includes the aforementioned electronic controller 20 of Figure 4 as the computer 152 shown in Figure 5B. When the plug material 120 melts, the pressure switch 151 generates the signal indicative of the predetermined pressure drop. Besides its usual role in controlling the pneumatic control unit 21 for each truck of the railcar, the electronic controller in this embodiment also responds to the signal generated by the pressure switch. Specifically, the electronic controller 20 responds to this signal by conveying to the lead locomotive an electrical signal. Conveyed along one of the electrical trainlines 29 as best shown in Figure 4, this electrical signal indicates that the temperature inside the bearing housing has exceeded the critical temperature.

Located in the lead locomotive of the passenger transit train is the aforementioned master controller 19 shown in Figure 4. Like the computer 152 described in connection with the basic embodiment, the master controller 19 can be programmed to respond to the electrical signal issued by the electronic controller 20. Specifically, the master controller 19 may activate an alarm, visual display or other means of notifying the train operator that the bearing has exceeded the critical temperature. Optionally, this means 170 of notifying may also be located on the railcar in which case the electronic controller 20 itself would be used to activate it.

The invention has been described as though incorporated into just one bearing assembly of a railcar truck. For each of the two preferred embodiments, however, it should be understood that the invention can just as easily be incorporated into all of the bearing assemblies on the truck. In this preferred type of arrangement, the pneumatic conduit 130 associated with each bearing assembly would merge at one common point from which the conduits would be supplied with air from the selected source of pressurized gas 160.

For passenger transit railcar trucks, for example, it is preferably at this common point that the pressure switch 151 would be located. Consequently, the pressure switch would generate a signal indicative of the predetermined pressure drop any time one of the four hot bearing detectors on the truck was compromised. In this system of hot bearing detectors, the electronic controller 20 would, of course, respond to the signal from the pressure switch 151 in the previously recited manner. Specifically, along an electrical trainline 29, it would still convey to the master controller 19 the electrical signal. The electrical signal will now indicate that at least one of the four hot bearing detectors on the truck have been compromised by temperature in excess of the critical temperature.

Preferably along with the electrical signal, the electronic controller would also convey to the master controller an identification code unique to the truck or railcar on which the potentially compromised bearing assembly is located. This would make it easier to precisely locate the affected bearing assembly. Even without use of such identification codes, any affected bearing assembly could be located merely by listening for the telltale signs of air leaking from the opened first end 112 of the passage of the affected hot bearing detector. Like freight railcar trucks equipped with the invention, the loss of air from a hot bearing detector should be audible. In fact, the first end of passage 111 could be shaped in such a way as to form a whistle so that an audible signal is generated by the air escaping from the passage when the plug material has melted. This is a readily discernable way to locate a suspect bearing assembly in whatever environment the invention will be used.

The presently preferred embodiments for carrying out the invention have been set forth in detail according to the Patent Act. Those persons of ordinary skill in the art to which this invention pertains may nevertheless recognize various alternative ways of practicing the invention without departing from the spirit and scope of the following claims. Those of such skill will also recognize that the foregoing description is merely illustrative and not intended to limit any of the ensuing claims to any particular narrow interpretation.

Accordingly, to promote the progress of science and the useful arts, I secure for myself by Letters Patent exclusive rights to all subject matter embraced by the following claims for the time prescribed by the Patent Act.

## Claims

1. An apparatus for detecting whether a bearing, disposed within a housing, has exceeded a critical temperature, said apparatus comprising:
(a) a detector body consolidated with such bearing housing, said detector body defining through itself a passage;
(b) a plug material that melts when exposed to a temperature that exceeds such critical temperature, said plug material used to fill sealingly a first end of said passage;
(c) a pneumatic conduit connected at (i) a leading end to a source of pressurized gas and (ii) at a terminal end to a second end of said passage from which said passage receives, and is pressurized by, such gas from such source; and
(d) a means, in communication with said pneumatic conduit, for warning of at least one of a predetermined drop in pressure from said passage and a characteristic increase in the flow of gas in said passage caused by melting of said plug material.

2. The apparatus recited in claim 1 wherein said means for warning includes:
(a) a pressure switch, disposed within said apparatus, to detect said predetermined drop in pressure occurring in said passage and generate, in response thereto, a signal indicative of said predetermined drop in pressure; and
(b) a computer, connected to said pressure switch, responsive to said signal by activating a means for notifying an operator that such bearing has exceeded such critical temperature.

3. The apparatus recited in claim 1 wherein said means for warning includes:
(a) a pressure transducer to detect an increase in flow of such gas in said passage and generate a signal indicative of said flow; and
(b) a computer, connected to said pressure transducer, responsive to said signal when indicative of said characteristic increase by activating a means for notifying an operator that such bearing has exceeded such critical temperature.

4. The apparatus recited in claim 1 further including a choke disposed within said pneumatic conduit.

5. The apparatus recited in claim 1 wherein said passage at said first end thereof is shaped so that an audible signal is generated by such gas escaping from said passage when said plug material has melted.

6. An apparatus for detecting whether a bearing within a bearing housing for an axle of a railcar truck has exceeded a critical temperature, such truck of the type having a pneumatic control unit to pneumatically operate the brakes of such truck and an electronic controller to electronically control the operation of such pneumatic control unit based on commands electrically received from a locomotive, said apparatus comprising:
(a) a detector body consolidated with such bearing housing, said detector body defining through itself a passage;
(b) a plug material that melts when exposed to a temperature that exceeds such critical temperature, said plug material used to fill sealingly a first end of said passage;
(c) a pneumatic conduit connected at (i) a leading end to a source of pressurized air associated with such pneumatic control unit and (ii) at a terminal end to a second end of said passage from which said passage receives, and is pressurized by, such air from such source of pressurized air; and
(d) a means, in communication with said pneumatic conduit, for warning of at least one of a predetermined drop in pressure from said passage and a characteristic increase in the flow of air in said passage caused by melting of said plug material.

7. The apparatus recited in claim 6 wherein said detector body is constructed in the form of a threaded plug so that said detector body can be screwed into a threaded bore of corresponding dimensions formed within such bearing housing.

8. The apparatus recited in claim 7 wherein said passage of said detector body is U-shaped so that both ends of said passage are accessible from the same side of said detector body when said detector body is screwed into such threaded bore of such bearing housing.

9. The apparatus recited in claim 6 wherein said means for warning includes:
(a) a pressure switch, disposed within said apparatus, to detect said predetermined drop in pressure occurring in said passage and generate, in response thereto, a signal indicative of said predetermined drop in pressure; and
(b) such electronic controller connected to said pressure switch, such electronic controller being responsive to said signal by conveying to such locomotive an electrical signal indicating such bearing has exceeded such critical temperature.

10. The apparatus recited in claim 6 wherein said means for warning includes:
(a) a pressure transducer to detect an increase in flow of such air within such passage and generate a signal indicative of said flow; and
(b) such electronic controller connected to said pressure transducer, such electronic controller programmed to respond to said signal when indicative of said characteristic increase by conveying to such locomotive an electrical signal indicating such bearing has exceeded such critical temperature.

11. The apparatus recited in claim 6 further including a choke disposed within said pneumatic conduit.

12. The apparatus recited in claim 6 wherein said passage at said first end thereof is shaped so that an audible signal is generated by such air escaping from said passage when said plug material has melted.

13. An apparatus for detecting whether a bearing within a bearing housing of a railcar wheel has exceeded a critical temperature, such railcar of the type that receives from a locomotive via a brake pipe pneumatically conveyed commands for service and emergency braking, said apparatus comprising:
(a) a detector body incorporated within such bearing housing, said detector body defining through itself a passage;
(b) a plug material that melts when exposed to a temperature that exceeds such critical temperature, said plug material used to fill sealingly a first end of said passage;
(c) a pneumatic conduit connected at (i) a terminal end to a second end of said passage and (ii) a leading end to such brake pipe from which said passage receives, and is pressurized by, air from such brake pipe; and
(d) a means, located in such locomotive, for warning of a characteristic increase in flow of such air within such brake pipe, said characteristic increase in flow being caused by escape of such air from such brake pipe to atmosphere via said passage upon melting of said plug material.

14. The apparatus recited in claim 13 wherein said detector body is constructed in the form of a threaded plug so that said detector body can be screwed into a threaded bore of corresponding dimensions formed within such bearing housing.

15. The apparatus recited in claim 14 wherein said passage of said detector body is U-shaped so that both ends of said passage are accessible from the same side of said detector body when said detector body is screwed into such threaded bore of such bearing housing.

16. The apparatus recited in claim 13 further including a choke disposed within said pneumatic conduit.

17. The apparatus recited in claim 13 wherein said means for warning includes:
(a) a flow detecting device, disposed on such locomotive, to detect an increase in flow of such air within such brake pipe and generate a signal indicative of said flow; and
(b) a central controller unit connected to said flow detecting device, said central controller unit programmed to respond to said signal when indicative of said characteristic increase by activating a means for notifying an operator that such bearing has exceeded such critical temperature.

18. The apparatus recited in claim 13 wherein said flow detecting device is any one of a differential pressure transducer and a flow meter.

19. The apparatus recited in claim 13 wherein said passage at said first end thereof is shaped so that an audible signal is generated by such air escaping from said passage when said plug material has melted.

20. The apparatus recited in claim 17 wherein said passage at said first end thereof is shaped so that an audible signal is generated by such air escaping from said passage when said plug material has melted.
